# EUROPÄISCHE PATENTSCHRIFT

(11) **EP 1 763 417 B1**
(45) Veröffentlichungstag und Bekanntmachung des Hinweises auf die Patenterteilung: **07.05.2008**
(21) Anmeldenummer: 05759308.9
(22) Anmeldetag: 30.06.2005
(51) Int. Cl.: B23C 5/22

(54) **FRÄSWERKZEUG**
MILLING TOOL
OUTIL DE FRAISAGE

(30) Priorität: 06.07.2004 DE 202004010630 U
(43) Veröffentlichungstag der Anmeldung: 21.03.2007
(73) Patentinhaber: KENNAMETAL INC., Latrobe, PA 15650-0231 (US)
(72) Erfinder: PRILLER, Franz, A-3291 Gaming (AT); SLADEK, Alfred, 90768 Fürth (DE)
(74) Vertreter: Tergau & Pohl Patentanwälte
(86) Internationale Anmeldenummer: PCT/EP2005/007029
(87) Internationale Veröffentlichungsnummer: WO 2006/002906

(56) Entgegenhaltungen:
- EP-A- 0 827 818
- DE-A1- 3 413 615
- US-A- 3 742 565
- US-A- 4 529 338
- PATENT ABSTRACTS OF JAPAN Bd. 1996, Nr. 12, 26. Dezember 1996 (1996-12-26) -& JP 08 206910 A (KYOCERA CORP), 13. August 1996 (1996-08-13)

## Beschreibung

Die Erfindung bezieht sich auf ein Fräswerkzeug mit einem Werkzeuggrundkörper und mit einer Anzahl von daran mittels eines Klemmelementes gehaltenen Schneidplatten, (Anspruch 1) und eine entsprechende Schneidplatte (Anspruch 12). Ein solches Werkzung bzw. Schneidplatte ist aus der JP08206910 bekannt.

Infolge der steigenden Anforderungen an technische Bauteile oder Werkstücke, die durch spanende Bearbeitung hergestellt werden, besteht nicht nur die Forderung nach einer besonders hohen Oberflächengüte, sondern auch nach einem besonders effizienten Einsatz des Fräswerkzeugs. So besteht insbesondere bei einem Scheibenfräser zur spanenden Bearbeitung beispielsweise eines Steinbohrers der Wunsch nach einer möglichst großen Anzahl von am Umfang eines scheibenförmigen Werkzeuggrundkörpers verteilt angeordneten Schneidplatten, die einerseits in möglichst einfacher Art und Weise auswechselbar und andererseits möglichst effizient einsetzbar sein sollen.

Der Erfindung liegt die Aufgabe zugrunde, ein möglichst effizient einsetzbares Fräswerkzeug anzugeben, das einen besonders flexiblen Einsatz anwendungsspezifisch ausgebildeter Schneidplatten ermöglicht.

Diese Aufgabe wird erfindungsgemäß gelöst durch die Merkmale des Anspruches 1. Dazu sind der Werkzeuggrundkörper des Fräswerkzeugs und die oder jede daran gehaltene Schneidplatte derart ausgebildet, dass auf deren einer Plattenseite ein geometrischer Anlageansatz hervorsteht, mit dem die Schneidplatte in einer korrespondierenden Auflagekontur im Werkzeuggrundkörper einliegt.

Die Erfindung geht dabei von der Überlegung aus, dass an ein und demselben Werkzeuggrundkörper für individuelle Fräskonturen bereitgestellte Schneidplatten mit unterschiedlichen, auch unsymmetrischen Schneidenkonturen eingesetzt werden können, wenn die Schneidplatte für deren Einbau im Werkzeug eine von der Schneidengeometrie unabhängige Plattenanlagefläche aufweist. Diese sollte eine geometrische Anlage- oder Auflagekontur sein, die von der Schneiden- oder Spanflächengeometrie der Schneidplatte unabhängig ist. Dies kann dadurch erreicht werden, dass auch Schneidplatten mit unsymmetrischer Schneidenkontur stets den gleichen geometrischen Ansatz als Anlagekontur aufweisen, der dann mit einer entsprechenden Auflagegeometrie im Werkzeuggrundkörper korrespondiert.

Durch die Ausbildung der Schneidplatte mit einem solchen geometrischen Anlageansatz kann vorteilhafterweise die Schneidplatte mehrschneidig ausgebildet werden. Deren beispielsweise vier oder sechs Seitenflächen bilden dann mit einer dem geometrischen Ansatz gegenüberliegenden, nachfolgend auch als Spanflächenseite bezeichneten (ersten) Plattenfläche eine entsprechende Anzahl von Schneidkanten. Dieses Prinzip der mehrschneidigen Schneidplatte mit einem an deren einer Spanflächenseite gegenüberliegender Plattenrückseite vorgesehenen domartigem geometrischen Anlageansatz ist sowohl bei einem Scheibenfräser mit einer Vielzahl von an dessen scheibenförmigen Werkzeuggrundkörper umfangsseitig angeordneten Schneidplatten als auch bei einem Fräswerkzeug mit einem stab- oder dornartigen Werkzeuggrundkörper realisierbar.

In vorteilhafter Ausgestaltung bildet der geometrische Anlageansatz eine zur gegenüberliegenden (ersten) Plattenfläche oder Spanflächenseite parallele Rückenfläche und eine stufen- oder kragenartige Auflagekontur mit einer der Anzahl der Schneidkanten entsprechenden Anzahl von Anlageflächen aus. Diese Auflagekontur verläuft vorzugsweise nicht quer oder senkrecht zur Rückenfläche bzw. zur hierzu parallelen Spanflächenseite, sondern unter einem Axialwinkel lediglich annähernd quer dazu. Der Axialwinkel weicht dabei zweckmäßigerweise vom Querverlauf oder vom rechtwinkligen Verlauf um 5° bis 15°, vorzugsweise (7 ± 1)° ab. Dieser Axialwinkel ist dabei angepasst an den Anstellwinkel, unter dem die Schneidplatte im Werkzeuggrundkörper gegenüber dessen Achse schräg angestellt montiert ist.

Diese um den Axialwinkel schräg verlaufende Auflagekontur des geometrischen Anlageansatzes ermöglicht in einfacher sowie zuverlässiger Art und Weise die exakte Positionierung von axial frei gespannten mehrschneidigen Schneidplatten mittels eines Plananschlagwerkzeugs. Dazu greift dieses bei der Montage der mehrschneidigen Schneidplatten mit dem Werkzeuggrundkörper lösbar verspannte Plananschlagwerkzeug mit zu dessen Planfläche parallel verlaufenden Anlagezapfen synchron an den geometrischen Anlageansätzen der Schneidplatten an. Dadurch können die Schneidplatten praktisch in einem Arbeitsgang gleichzeitig exakt am Werkzeuggrundkörper positioniert und daran lösbar fixiert werden.

Zur Positionierung und Fixierung der oder jeder Schneidplatte am Werkzeuggrundkörper ist zweckmäßigerweise ein Klemmelement in Form eines Klemmkeils vorgesehen. Dieser weist eine erste Klemmfläche auf, der unter Bildung eines Klemmschlitzes für die Schneidplatte eine an einem Klemmsteg des Werkzeuggrundkörpers vorgesehene Anlagefläche gegenüberliegt. An dieser liegt dann die Schneidplatte mit der durch den geometrischen Anlageansatz gebildeten Rückenfläche an. Der Klemmkeil weist zweckmäßigerweise eine Durchgangsöffnung für eine Fixierschraube auf. Hierzu ist vorzugsweise eine Doppelgewindeschraube vorgesehen, so dass dann der Klemmkeil ein Innengewinde für die in einer Gewindebohrung des Werkzeuggrundkörpers geführte Doppelgewindeschraube aufweist. Zur lösbaren Befestigung der Schneidplatte am Werkzeuggrundkörper kann auch eine Klemmpratze oder dgl. vorgesehen sein.

In besonders vorteilhafter Weiterbildung ist als Klemmelement ein Doppelklemmkeil mit einander gegenüberliegenden Klemmflächen vorgesehen. Der Doppelklemmkeil ermöglicht die gleichzeitige Klemmfixierung von zwei Schneidplatten. Bei dieser Ausführungsform erfüllt die durch den geometrischen Anlageansatz der Schneidplatte gebildete Rückenfläche quasi eine Doppelfunktion, indem diese je nach Position der Schneid platte entweder als Anlagefläche oder als Klemmfläche dient. So liegt der Doppelklemmkeil mit einer seiner Klemmflächen an der Spanflächenseite der Schneidplatte an, während dann deren durch den geometrischen Anlageansatz gebildete Rückenfläche als Anlagefläche dient. Die weitere mittels des Doppelklemmkeils klemmfixierte Schneidplatte liegt dann mittels deren Spanflächenseite an der Anlagefläche des Klemmstegs des Werkzeuggrundkörpers an, während die durch den geometrischen Anlageansatz gebildete Rückenfläche dieser Schneidplatte als mit dem Doppelklemmkeil zusammenwirkende Klemmfläche wirkt.

Die mit der Erfindung erzielten Vorteile bestehen insbesondere darin, dass durch die Ausbildung einer Schneidplatte mit einem geometrischen Anlageansatz, mit dem die Schneidplatte an einer korrespondierenden Auflagekontur im Werkzeuggrundkörper einliegt, auch mehrschneidige Schneidplatten nach Art von so genannten Wendeschneidplatten auch bei unsymmetrischer Schneiden- oder Spanflächengeometrie einsetzbar sind. Auch können diese bei einem Scheibenfräser im Werkzeuggrundkörper axial frei gespannt werden. Dadurch können derselbe Werkzeuggrundkörper für hinsichtlich deren Schneidengeometrie unterschiedliche Schneideinsätze eingesetzt und die mehrschneidigen Schneideinsätze mehrfach verwendet werden.

Nachfolgend wird ein Ausführungsbeispiel der Erfindung anhand einer Zeichnung näher erläutert. Darin zeigen:
- Fig. 1 und 2: in einer Seitenansicht bzw. Draufsicht ein erfindungsgemäßes Fräswerkzeug mit einem scheibenförmigen Werkzeuggrundkörper und daran gehaltenen mehrschneidigen Schneidplatten,
- Fig. 3: einen Ausschnitt III aus Fig. 1 in größerem Maßstab mit einer Klemmfixierung der Schneidplatten mittels Doppelklemmkeil,
- Fig. 4 und 5: in einer Vorderansicht bzw. Seitenansicht eine erfindungsgemäße mehrschneidige Schneidplatte,
- Fig. 6: ausschnittsweise in einer Schnittdarstellung das mit einem Plananschlagwerkzeug lösbar verschraubte Fräswerkzeug bei axial frei gespannten Schneidplatten,
- Fig. 7: eine Aufsicht auf das mit dem Plananschlagwerkzeug gemäß Fig. 6 verschraubte Fräswerkzeug, und
- Fig. 8: einen Ausschnitt VIII aus Fig. 7 in größerem Maßstab mit planparalleler Anlage des Plananschlagwerkzeugs am geometrischen Anlageansatz der erfindungsgemäßen Schneidplatte.

Einander entsprechende Teile sind in allen Figuren mit den gleichen Bezugszeichen versehen.

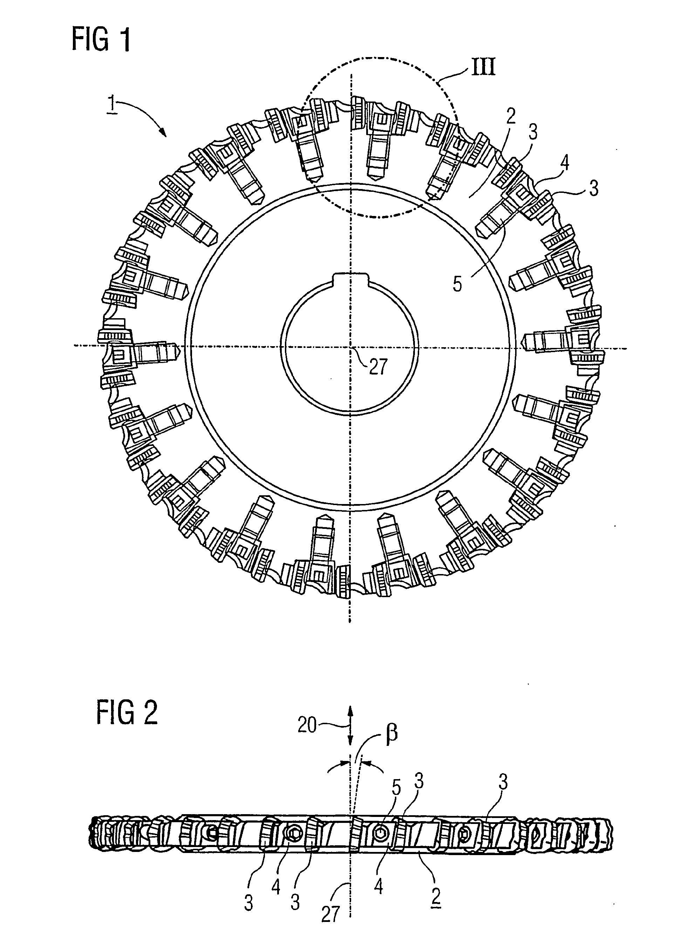

Die Figuren 1 bis 3 zeigen das nachfolgend als Scheibenfräser bezeichnete Fräswerkzeug 1 mit einem scheibenförmigen Werkzeuggrundkörper 2, an dessen Außenumfang eine Vielzahl von Schneideinsätzen 3 gleichmäßig verteilt angeordnet sind. Jeweils zwei Schneidplatten 3 sind mittels eines Doppelklemmkeils 4 am Werkzeuggrundkörper 2 lösbar klemmfixiert. Die lösbare Fixierung der Schneidplatten 3 am Werkzeuggrundkörper 2 erfolgt im Ausführungsbeispiels mittels den Klemmkeil 4 teilweise durchsetzenden Doppelgewindeschrauben 5, die als Innensechskantschrauben ausgeführt sind.

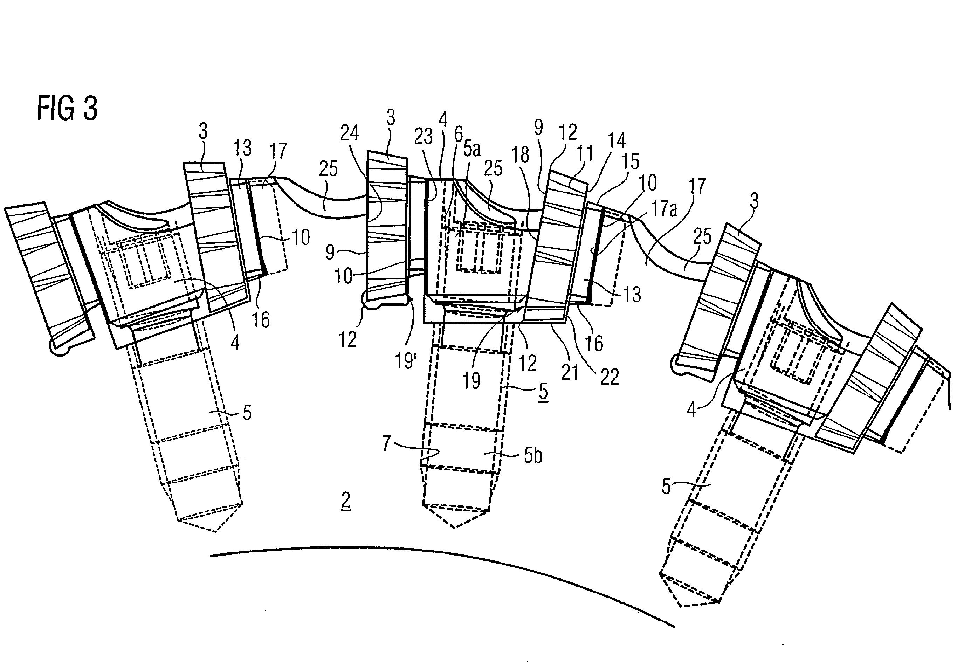

Gemäß Fig. 3 ist dabei die Doppelgewindeschraube 5 mit deren Gewindekopf 5a mit einem korrespondierenden Innengewinde 6 im Klemmkeil 4 einerseits und mit deren Gewindschaft 5b in einer im Werkzeuggrundkörper 2 vorgesehenen Gewindebohrung 7 verschraubt.

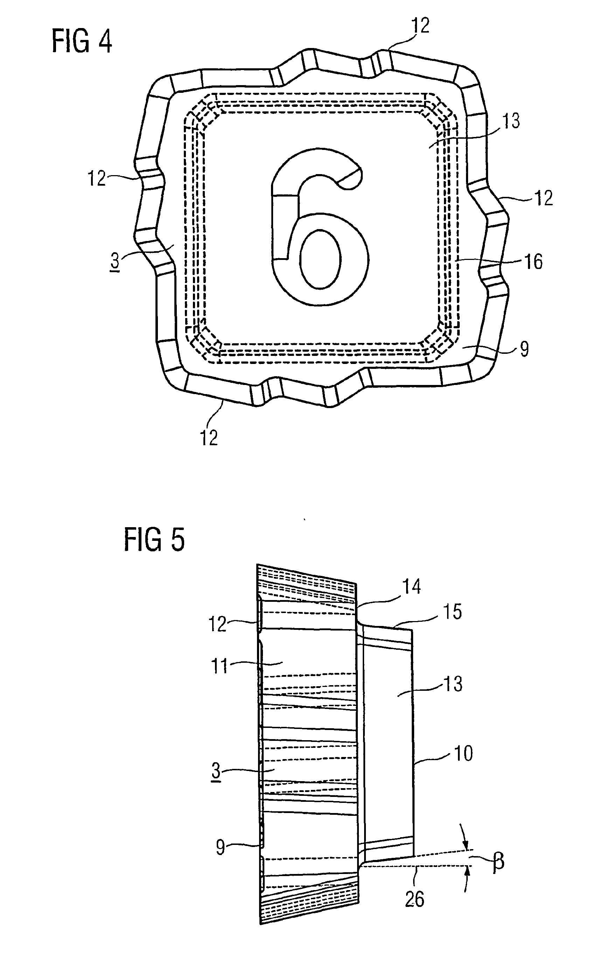

Wie auch aus den Figuren 4 und 5 ersichtlich ist, weist die Schneidplatte 3 in gegenüberliegenden Plattenebenen jeweils eine Plattenfläche 9, 10 sowie eine Anzahl von im Ausführungsbeispiels vier Seitenflächen 11 auf. Die Seitenflächen 11 bilden mit der nachfolgend als Spanflächenseite bezeichneten ersten Plattenfläche 9 der Schneidplatte 3 jeweils eine Schneidkante 12. Die im Ausführungsbeispiel vierseitige Schneidplatte 3 weist somit umlaufend vier Schneidkanten 12 mit individueller, jedoch gleichartiger Schneidenkontur auf. Die in Fig. 4 dargestellte Schneidplatte 3 dient beispielsweise zur Herstellung oder Fertigung von Spanwendelnuten in Steinbohrern.

Die Schneidplatte 3 weist einen geometrischen Anlageansatz 13 auf, der eine zur Spanflächenseite 9 parallele und dieser gegenüberliegende Rückenfläche 10 als zweite Plattenfläche ausbildet. Zudem bildet der an die Schneidplatte 3 vorzugsweise angeformte geometrische Anlageansatz 13, der aus einer der Spanflächenseite 9 und damit den Schneidkanten 12 gegenüberliegenden Plattenrückseite 14 der Schneidplatte 3 domartig hervorragt, eine stufen- oder kragenartige Auflagekontur mit entsprechenden Anlage- oder Plananlageflächen 15 aus. Mit dieser, die Plananlageflächen der mehrschneidigen Schneidplatte 3 bildenden Auflagekontur 15 sowie mit der Rückenfläche 10 des geometrischen Anlageansatzes 13 liegt die Schneidplatte 3 in einer korrespondierenden Auflagekontur 16 des Werkzeuggrundkörpers 2 ein.

Ein am Werkzeuggrundkörper 2 angeformter Klemmsteg 17 weist dabei eine entsprechende Anlagefläche 17a auf, an der die Schneidplatte 3 mit deren durch den geometrischen Anlageansatz 13 gebildeten Rückenfläche 10 anliegt. Über diese Anlagefläche 17a am Klemmsteg 17 des Werkzeuggrundkörpers 2 und mit der Auflagekontur 16 ist die mit dem geometrischen Anlageansatz 13 korrespondierende An- bzw. Auflagekontur am Werkzeuggrundkörper 2 gebildet. Somit ist zwischen einer der Spananlagefläche 9 zugewandten ersten Klemmfläche 18 des Klemmkeils 4 und der Anlagefläche 17a des Klemmstegs 17 des Werkzeuggrundkörpers 2 ein Klemmschlitz oder -spalt 19 für die axial frei spannbare Schneidplatte 3 gebildet. In diesen Klemmschlitz 19 des Werkzeuggrundkörpers 2 ist die jeweilige Schneidplatte 3 in Axialrichtung 20 (Fig. 2) seitlich einschiebbar.

Wie aus Fig. 3 ersichtlich ist, liegt dabei die Schneidplatte 3 sowohl mit deren dem Werkzeuggrundkörper 2 zugewandten Seitenfläche 11 als auch mit der dortigen Schneidkante 12 beabstandet in einer Aufnahmenut 21 im Werkzeuggrundkörper 2 ein. Diese Aufnahmenut 21 mündet über eine Stufenkontur 22 in die Auflagekontur oder - fläche 16 ein. Die Schneidplatte 3 liegt somit lediglich mit deren geometrischem Anlageansatz 13 am Werkzeuggrundkörper 2 an, während die dort einliegende Schneidkante 12 keinen Berührungskontakt mit dem Werkzeuggrundkörper 2 hat.

Der Doppelklemmkeil 4 dient zur Klemmfixierung von zwei aus Fig. 4 ersichtlichen mehrschneidigen und hinsichtlich deren Schneidengeometrie unsymmetrischen Schneidplatten 3. Dazu liegt der Doppelklemmkeil 4 mit dessen der Klemmfläche 18 gegenüberliegenden weiteren Klemmfläche 23 an der Rückenfläche 10 der weiteren Schneidplatte 3 an, die in einem entsprechenden Klemmschlitz 19' im Werkzeuggrundkörper 2 einliegt. Hier dient die zur Spananlagefläche 9 parallel verlaufende Rückenfläche 10 der Schneidplatte 3 als Klemmfläche, während die Rückenfläche 10 der von demselben Doppelklemmkeil 4 fixierten anderen Schneidplatte 3 als Anlagefläche dient. Ebenso ist die Spanflächenseite 9 der jeweiligen Schneidplatte 3 im Montagezustand einerseits als Anlagefläche an einer entsprechenden Klemmfläche 24 des Klemmstegs 17 wirksam, während die Spanflächenseite 9 der anderen Schneidplatte 3 als Klemmfläche wirksam ist.

Sowohl der oder jeder Doppelklemmkeil 4 als auch die Klemmstege 17 sind jeweils mit einer sich zur Spanflächenseite 9 der jeweiligen Schneidplatte 3 hin abfallenden Spankammer 25 versehen, in der der während des Fräsvorgangs geformte Span abfließen kann.

Wie aus Fig. 5 vergleichsweise deutlich ersichtlich ist, ist die Auflagekontur 15 des geometrischen Anlageansatzes 13 der Schneidplatte 3 quadratisch und dabei unter Bildung von vier gleichartigen Plananlageflächen konisch oder keilförmig ausgebildet. Auch kann der geometrische Anlageansatz 13 der Schneidplatte 3 hinsichtlich dessen geometrischer Form polygonal, z. B. sechseckig, ausgestaltet sein. Er weicht dabei gegenüber der zur Spanflächenseite 9 und zur Rückenfläche 10 normal verlaufenden Senkrechten 26 um einen Axialwinkel β ab. Dieser Winkel β beträgt zwischen 5° und 15°, zweckmäßigerweise 6° bis 10°, vorzugsweise 7°.

Der Axialwinkel β ist dabei gleich dem in Fig. 2 dargestellten Anstellwinkel β, um den die jeweilige Schneidplatte 3 gegenüber der Werkzeugachse 27 des Werkzeuggrundkörpers 2 schräg angestellt ist. Diese Schrägstellung ermöglicht den Eingriff lediglich der Schneide oder Schneidkante 12 der Schneidplatte 3 bei deren spanenden Bearbeitung eines (nicht dargestellten) Werkstücks, so dass die Seitenflächen 11, die im Einbauzustand im Werkzeuggrundkörper 2 gerade nicht als Plattenanlagefläche dienen, für die jeweils im Eingriff befindliche Schneide oder Hauptschneide 12 als Spanfläche dient.

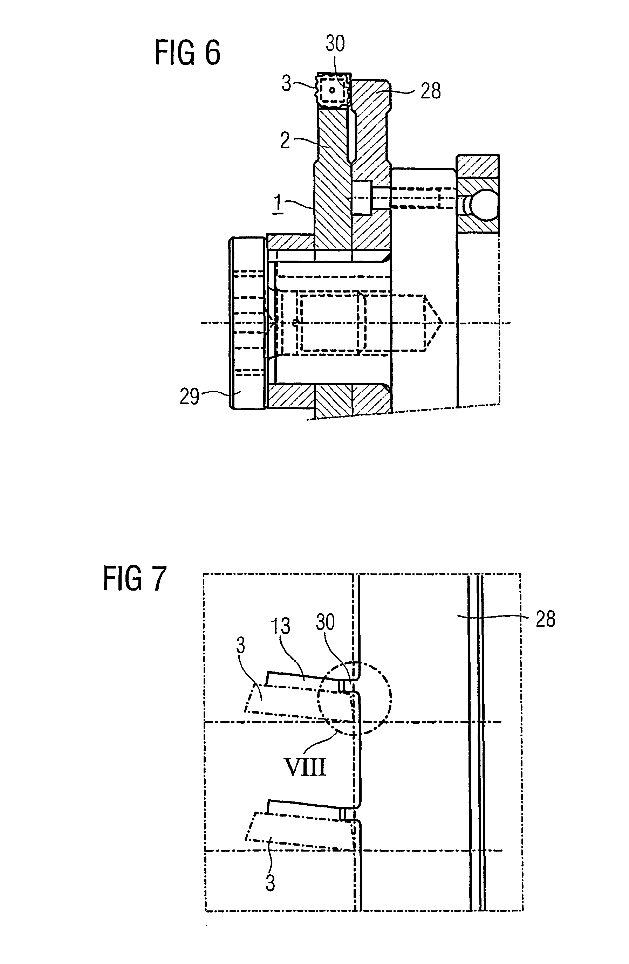

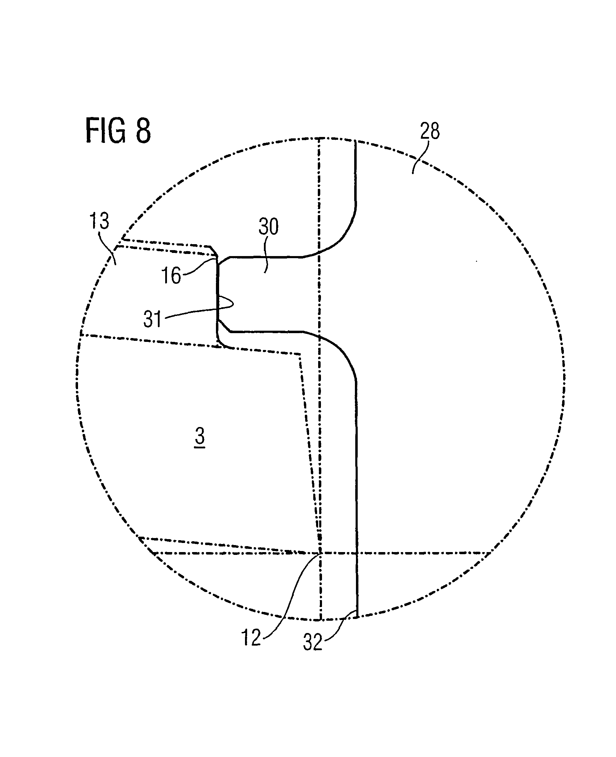

Gemäß den Figuren 6 bis 8 gewährleistet dieser Axialwinkel β zudem eine planparallele Anlage eines Plananschlagwerkzeuges 28. Mit diesem ist das Fräswerkzeug 1 mittels einer Montageschraube 29 zur Positionierung der Schneidplatten 3 am Werkzeuggrundkörper 2 lösbar fixiert. Dabei greifen Anlage- oder Anschlagzapfen 30 des Plananschlagwerkzeugs 28 stirnseitig mit deren Positionierflächen 31 an der Anlagefläche 16 des geometrischen Anlageansatzes 13 der jeweiligen Schneidplatte 3 an. Diese Positionierflächen 31 verlaufen parallel zur Anschlagfläche 32 des Plananschlagwerkzeugs 28, obwohl die einzelnen Schneidplatten 3 im Werkzeuggrundkörper 2 unter dem Winkel β axial schräggestellt sind.

Sobald die einzelnen Schneidplatten 3 in die zugehörigen Klemmschlitze 19 im Werkzeuggrundkörper 2 eingelegt und mittels des Plananschlagwerkzeugs 28 exakt positioniert sind, können die Doppelklemmkeile 4 verschraubt und damit die mehrschneidigen Schneidplatten 3 axial gespannt werden.

## Patentansprüche

1. Fräswerkzeug (1) mit einem Werkzeuggrundkörper (2) und mit einer Anzahl von daran mittels eines Klemmelementes (4) gehaltenen Schneidplatten (3) mit in gegenüberliegenden Plattenebenen jeweils einer Plattenfläche (9, 10) sowie mit mindestens einer Seitenfläche (11), die mit einer ersten Plattenfläche (9) eine Schneidkante (12) bildet, wobei gegenüberliegend zur ersten Plattenfläche (9) aus der Schneidplatte (3) ein geometrischer Anlageansatz (13) hervorsteht, mit dem die Schneidplatte (3) in einer korrespondierenden Auflagekontur (16) im Werkzeuggrundkörper (2) einliegt,
**dadurch gekennzeichnet,**
**dass** der geometrische Anlageansatz (13) eine Anlagekontur (15) ausbildet, die zu einer zur ersten Plattenfläche (9) parallelen Rückenfläche (10) unter einem positiven Axialwinkel (β) zwischen 5° und 15° quer verläuft.

2. Fräswerkzeug nach Anspruch 1,
**gekennzeichnet durch**
einen Axialwinkel β zwischen 6° und 10°, vorzugsweise (7 ± 1)°.

3. Fräswerkzeug nach Anspruch 1 oder 2,
**dadurch gekennzeichnet,**
**dass** das Klemmelement (4) eine der ersten Plattenseite (10) der Schneidplatte (3) zugewandte erste Klemmfläche (18) aufweist, der unter Bildung eines Klemmschlitzes (19) für die Schneidplatte (3) eine an einem Klemmsteg (17) des Werkzeuggrundkörpers (2) vorgesehene Anlagefläche (17a) gegenüberliegt, an der die Schneidplatte (3) mit deren durch den geometrischen Anlageansatz (13) gebildeten Rückenfläche (10) anliegt.

4. Fräswerkzeug nach einem der Ansprüche 1 bis 3,
**gekennzeichnet durch**
einen Klemmkeil als Klemmelement (4).

5. Fräswerkzeug nach Anspruch 4,
**dadurch gekennzeichnet,**
**dass** der Klemmkeil (4) ein Innengewinde (5b) für eine in einer Gewindebohrung (7) des Werkzeuggrundkörpers (2) geführte Gewindeschraube (5) aufweist.

6. Fräswerkzeug nach einem der Ansprüche 1 bis 5,
**dadurch gekennzeichnet,**
**dass** das Klemmelement (4) als Doppelklemmkeil mit einander gegenüberliegenden Klemmflächen (18, 23) ausgebildet ist.

7. Fräswerkzeug nach Anspruch 6,
**gekennzeichnet durch**
eine erste Klemmfläche (18) zur Klemmanlage an der ersten Plattenfläche (9) der Schneidplatte (3) und mit einer der ersten Klemmfläche (18) gegenüberliegenden zweiten Klemmfläche (23) zur Klemmanlage an der **durch** den geometrischen Anlageansatz (13) einer weiteren Schneidplatte (3) gebildeten Rückenfläche (10).

8. Fräswerkzeug nach Anspruch 6 oder 7,
**dadurch gekennzeichnet,**
**dass** der Doppelklemmkeil (4) zur Klemmhalterung von zwei Schneidplatten (3) mit einer ersten Klemmfläche (18) an der ersten Plattenfläche (9) einer ersten Schneidplatte (3) und mit der gegenüberliegenden zweiten Klemmfläche (23) an der durch den geometrischen Anlageansatz (13) gebildeten Rückenfläche (10) der zweiten Schneidplatte (3) anliegt.

9. Fräswerkzeug nach Anspruch 8,
**dadurch gekennzeichnet,**
**dass** der zweiten Klemmfläche (23) des Doppelklemmkeils (4) unter Bildung eines Klemmschlitzes (19') für die zweite Schneidplatte (3) eine an einem Klemmsteg (17) des Werkzeuggrundkörpers (2) vorgesehene Anlagefläche (24) gegenüberliegt, an der die zweite Schneidplatte (3) mit deren erster Plattenfläche (9) anliegt.

10. Fräswerkzeug (1) nach einem der Ansprüche 1 bis 9,
**gekennzeichnet durch**
- eine mehrschneidige Schneidplatte (3) mit einer unsymmetrischen Spanflächenseite (9) und mit einer Anzahl von Seitenflächen (11), die mit der Spanflächenseite (9) eine der Anzahl der Seitenflächen (11) entsprechende Anzahl von Schneidkanten (12) bilden, und
- einen mehrseitigen geometrischen Anlageansatz (13) auf der der Spanflächenseite (9) gegenüberliegenden Plattenrückseite (14) zur Ausbildung einer der Anzahl der Schneidkanten (12) entsprechenden Anzahl von Plananlageflächen (15).

11. Fräswerkzeug nach einem der Ansprüche 1 bis 10,
**gekennzeichnet durch**
einen domartig aus der Plattenrückseite (14) herausragenden, insbesondere zumindest annähernd quadratischen, Anlageansatz (13).

12. Mehrschneidige Schneidplatte (3) für ein Fräswerkzeug (1) nach einem der Ansprüche 1 bis 11,
mit in gegenüberliegenden Plattenebenen jeweils einer Plattenfläche (9, 10) sowie mit mindestens einer Seitenfläche (11), die mit einer ersten Plattenfläche (9) eine Schneidkante (12) bildet, wobei gegenüberliegend zur ersten Plattenfläche (9) aus der Schneidplatte (3) ein geometrischer Anlageansatz (13) hervorsteht, mit dem die Schneidplatte (3) in einer korrespondierenden Auflagekontur (16) in einen Werkzeuggrundkörper (2) einlegbar ist,
**dadurch gekennzeichnet,**
**dass** der geometrische Anlageansatz (13) eine Anlagekontur (15) ausbildet, die zu einer zur ersten Plattenfläche (9) parallelen Rückenfläche (10) unter einem positiven Axialwinkel (β) zwischen 5° und 15° quer verläuft.

## Claims

1. Milling tool (1) comprising a tool base body (2) and comprising a number of cutting plates (3) held thereon by means of a clamping element (4) having in opposing plate planes a respective plate surface (9, 10) and having at least one lateral surface (11) forming a cutting edge (12) with a first plate surface (9), there protruding from the cutting plate (3) opposite the first plate surface (9) a geometrical bearing lug (13) with which the cutting plate (3) rests in a corresponding contour support (16) in the tool base body (2), **characterized in that** the geometrical bearing lug (13) forms a contour bearing surface (15) extending transversely to a back surface (10) parallel to the first plate surface (9) at a positive axial angle (β) of between 5° and 15°.

2. Milling tool according to Claim 1, **characterized by** an axial angle β of between 6° and 10°, preferably (7 ± 1)°.

3. Milling tool according to either Claim 1 or Claim 2, **characterized in that** the clamping element (4) has a first clamping surface (18) which faces the first plate side (10) of the cutting plate (3) and is opposed, forming a clamping slot (19) for the cutting plate (3), by a bearing surface (17a) which is provided on a clamping web (17) of the tool base body (2) and against which the back surface (10), formed by the geometrical bearing lug (13), of the cutting plate (3) rests.

4. Milling tool according to any one of Claims 1 to 3, **characterized by** a clamping wedge as the clamping element (4).

5. Milling tool according to Claim 4, **characterized in that** the clamping wedge (4) has an internal thread (5b) for a threaded screw (5) guided in a threaded hole (7) of the tool base body (2).

6. Milling tool according to any one of Claims 1 to 5, **characterized in that** the clamping element (4) is configured as a double clamping wedge having mutually opposing clamping surfaces (18, 23).

7. Milling tool according to Claim 6, **characterized by** a first clamping surface (18) for clamping bearing on the first plate surface (9) of the cutting plate (3) and having a second clamping surface (23) opposing the first clamping surface (18) for clamping bearing on the back surface (10), formed by the geometrical bearing lug (13), of a further cutting plate (3).

8. Milling tool according to either Claim 6 or Claim 7, **characterized in that** the double clamping wedge (4) rests, for clamping fixation of two cutting plates (3), with a first clamping surface (18) against the first plate surface (9) of a first cutting plate (3) and with the opposing second clamping surface (23) against the back surface (10), formed by the geometrical bearing lug (13), of the second cutting plate (3).

9. Milling tool according to Claim 8, **characterized in that** the second clamping surface (23) of the double clamping wedge (4) is opposed, forming a clamping slot (19') for the second cutting plate (3), by a bearing surface (24) which is provided on a clamping web (17) of the tool base body (2) and against which the first plate surface (9) of the second cutting plate (3) rests.

10. Milling tool (1) according to any one of Claims 1 to 9, **characterized by**
- a multi-edged cutting plate (3) having an asymmetric cutting-face side (9) and having a number of lateral surfaces (11) forming with the cutting-face side (9) a number of cutting edges (12) corresponding to the number of lateral surfaces (11), and
- a polygonal geometrical bearing lug (13) on the plate rear side (14) opposing the cutting-face side (9) for forming a number of plane bearing surfaces (15) corresponding to the number of cutting edges (12).

11. Milling tool according to any one of Claims 1 to 10, **characterized by** a bearing lug (13) which is, in particular, at least approximately square and protrudes from the plate rear side (14) in a dome-like manner.

12. Multi-edged cutting plate (3) for a milling tool (1) according to any one of Claims 1 to 11, having in opposing plate planes a respective plate surface (9, 10) and having at least one lateral surface (11) forming a cutting edge (12) with a first plate surface (9), there protruding from the cutting plate (3) opposite the first plate surface (9) a geometrical bearing lug (13) with which the cutting plate (3) can be inserted in a corresponding contour support (16) in a tool base body (2), **characterized in that** the geometrical bearing lug (13) forms a contour bearing surface (15) extending transversely to a back surface (10) parallel to the first plate surface (9) at a positive axial angle (β) of between 5° and 15°.

## Revendications

1. Outil de fraisage (1) comprenant un corps de base d'outil (2) dans lequel sont maintenues au moyen d'un élément de serrage (4), un certain nombre de plaquettes de coupe (3) comprenant, dans des plans de plaquette opposés, respectivement une surface de plaquette (9, 10), ainsi qu'au moins une surface latérale (11) qui forme avec une première surface de plaquette (9) une arête de coupe (12), la plaquette de coupe (3) étant telle qu'à l'opposé de ladite première surface de plaquette (9) en fasse saillie une embase d'appui géométrique (13) avec laquelle la plaquette de coupe (3) vient s'insérer dans un contour de portée (16) correspondant dans le corps de base d'outil (2),
**caractérisé en ce que** l'embase d'appui géométrique (13) forme un contour d'appui (15) qui s'étend transversalement à une surface arrière (10) parallèle à ladite première surface de plaquette (9), sous un angle axial (β) positif compris entre 5° et 15°.

2. Outil de fraisage selon la revendication 1, **caractérisé par** un angle axial (β) compris entre 6° et 10°, de préférence de (7 ± 1)°.

3. Outil de fraisage selon la revendication 1 ou 2, **caractérisé en ce que** l'élément de serrage (4) présente une première surface de serrage (18) qui est dirigée vers la première surface de plaquette (9) de la plaquette de coupe (3), et à laquelle est opposée, en formant une fente ou un intervalle de serrage (19) pour la plaquette de coupe (3), une surface d'appui (17a) qui est prévue sur une nervure de serrage (17) du corps de base d'outil (2), et sur laquelle vient s'appuyer la plaquette de coupe (3) avec sa surface arrière (10) formée par l'embase d'appui géométrique (13).

4. Outil de fraisage selon l'une des revendications 1 à 3, **caractérisé par** un coin de serrage en guise d'élément de serrage (4).

5. Outil de fraisage selon la revendication 4, **caractérisé en ce que** le coin de serrage (4) présente un filetage intérieur (5b) pour une vis filetée (5) guidée dans un trou taraudé (7) du corps de base d'outil (2).

6. Outil de fraisage selon l'une des revendications 1 à 5, **caractérisé en ce que** l'élément de serrage (4) est réalisé sous forme de coin de serrage double comportant des surfaces de serrage (18, 23) mutuellement opposées.

7. Outil de fraisage selon la revendication 6, **caractérisé par** une première surface de serrage (18) destinée à venir en appui de serrage sur la première surface de plaquette (9) de la plaquette de coupe (3), et par une deuxième surface de serrage (23), qui est opposée à la première surface de serrage (18), et est destinée à venir en appui de serrage sur la surface arrière (10) formée par l'embase d'appui géométrique (13) d'une autre plaquette de coupe (3).

8. Outil de fraisage selon la revendication 6 ou 7, **caractérisé en ce que** le coin de serrage double (4), pour la fixation par serrage de deux plaquettes de coupe (3), vient s'appuyer avec une première surface de serrage (18) sur la première surface de plaquette (9) d'une première plaquette de coupe (3), et avec la deuxième surface de serrage (23) opposée, sur la surface arrière (10) formée par l'embase d'appui géométrique (13) de la deuxième plaquette de coupe (3).

9. Outil de fraisage selon la revendication 8, **caractérisé en ce qu'**à la deuxième surface de serrage (23) du coin de serrage double (4) est opposée, en formant une fente ou un intervalle de serrage (19') pour la deuxième plaquette de coupe (3), une surface d'appui (24) qui est prévue sur une nervure de serrage (17) du corps de base d'outil (2), et sur laquelle s'appuie la deuxième plaquette de coupe (3) avec sa première surface de plaquette (9).

10. Outil de fraisage selon l'une des revendications 1 à 9, **caractérisé par**
- une plaquette de coupe (3) à arêtes de coupe multiples avec une face de coupe (9) non symétrique et avec un certain nombre de surfaces latérales (11), qui forment avec la face de coupe (9) un nombre d'arêtes de coupe (12) correspondant au nombre de surfaces latérales (11), et
- une embase d'appui géométrique (13) à côtés multiples sur la face arrière de plaquette (14) opposée à la face de coupe (9), pour former un nombre de surfaces d'appui transversales planes (15) correspondant au nombre des arêtes de coupe (12).

11. Outil de fraisage selon l'une des revendications 1 à 10, **caractérisé par** une embase d'appui (13) faisant saillie en forme de dôme de la face arrière de plaquette (14), notamment au moins approximativement de forme carrée.

12. Plaquette de coupe (3) à arêtes de coupe multiples pour un outil de fraisage (1) selon l'une des revendications 1 à 11, comprenant, dans des plans de plaquette opposés, respectivement une surface de plaquette (9, 10), ainsi qu'au moins une surface latérale (11) qui forme avec une première surface de plaquette (9) une arête de coupe (12), la plaquette de coupe (3) étant telle qu'à l'opposé de ladite première surface de plaquette (9) en fasse saillie une embase d'appui géométrique (13) avec laquelle la plaquette de coupe (3) peut venir s'insérer dans un contour de portée (16) correspondant dans un corps de base d'outil (2),
**caractérisée en ce que** l'embase d'appui géométrique (13) forme un contour d'appui (15) qui s'étend transversalement à une surface arrière (10) parallèle à ladite première surface de plaquette (9), sous un angle axial (β) positif compris entre 5° et 15°.
